# EUROPEAN PATENT APPLICATION

(11) **EP 4 506 135 A1**
(43) Date of publication of application: **12.02.2025**
(21) Application number: 24193148.4
(22) Date of filing: 06.08.2024
(51) Int. Cl.: B29C 45/00, B29C 45/26, B29C 45/33

(54) **MOLD, MOLD CLAMPING DEVICE, INJECTION MOLDING MACHINE, AND MOLDING METHOD FOR MOLDED ARTICLE**

(30) Priority: 09.08.2023 JP 2023129884
(71) Applicant: The Japan Steel Works, Ltd., Tokyo 141-0032 (JP)
(72) Inventor: NAKAYAMA, Kiyotaka, Tokyo, 1410032 (JP); NAITO, Akihiro, Tokyo, 1410032 (JP); UEMURA, Takashi, Tokyo, 1410032 (JP); MATSUZAKI, Koji, Tokyo, 1410032 (JP); SAKAMOTO, Ryuki, Tokyo, 1410032 (JP); NISHIDA, Shoso, Tokyo, 1410032 (JP)
(74) Representative: Simmons & Simmons LLP (Munich)

(57) **Abstract**

A mold includes a guide pin configured to guide mold closing. The guide pin is housed in a guide pin housing hole formed in a parting line and is configured to be driven by a predetermined drive mechanism. The guide pin is configured to protrude its tip end from the parting line and to retract into the guide pin housing hole by the drive mechanism.

## Description

### TECHNICAL FIELD

The present disclosure relates to a mold having a guide pin, a mold clamping device having the mold, an injection molding machine, and a molding method for a molded article.

### BACKGROUND

An injection molding machine includes a mold clamping device for clamping a mold, and an injection device for melting an injection material and injecting the molten material into the mold. A so-called horizontal injection molding machine includes a mold clamping device provided on a bed and an injection device provided on the bed and on a side of the mold clamping device. The mold provided in the mold clamping device has a guide pin, for example, as described in JPH04-197614A. That is, the guide pin is embedded in one mold, and a pin hole is formed in the other mold. When the pair of molds are clamped, the guide pin is inserted into the pin hole, so that misalignment is prevented and the molds can be clamped with high accuracy.

### SUMMARY

When the molds are clamped, the guide pin prevents the molds from misaligning, so that the molds can be clamped with high accuracy. However, problems are also found. Since the guide pin protrudes from a parting line in the one mold, there is a problem that processing to be performed in the vicinity of the mold is complicated. For example, when a molded article molded in the molds is taken out by a robot hand or the like, it is necessary to prevent the robot hand from colliding with the guide pin. That is, the robot hand is required to be controlled while avoiding the guide pin. Alternatively, the same applies to a case where an insert part is inserted into the mold by a robot hand or the like, and it is necessary to pay attention so as not to collide with the guide pin.

The present disclosure provides a mold that can simplify processing to be performed in the vicinity of the mold.

Other problems and novel features will become apparent from description of the present description and the accompanying drawings.

In the present disclosure, a guide pin is stored in a guide pin housing hole formed in a parting line. The guide pin is configured to protrude its tip end from the parting line or to retract into the guide pin housing hole by a predetermined drive mechanism.

The present disclosure can increase the degree of freedom of work to be performed in the vicinity of the mold.

### BRIEF DESCRIPTION OF DRAWINGS

FIG. 1 is a front view showing an injection molding machine according to a first illustrative embodiment.
FIG. 2 is a front cross-sectional view showing a part of a mold clamping device and a mold according to the first illustrative embodiment.
FIG. 3 is a flowchart showing steps of a molding method for a molded article according to the first illustrative embodiment.
FIG. 4A is a front cross-sectional view showing the part of the mold clamping device and the mold according to the first illustrative embodiment.
FIG. 4B is a front cross-sectional view showing the part of the mold clamping device and the mold according to the first illustrative embodiment.
FIG. 4C is a front cross-sectional view showing the part of the mold clamping device and the mold according to the first illustrative embodiment.
FIG. 4D is a front cross-sectional view showing the part of the mold clamping device, the mold according to the first illustrative embodiment, and a pair of half molded articles.
FIG. 4E is a front cross-sectional view showing the part of the mold clamping device, the mold according to the first illustrative embodiment, the pair of half molded articles, and a heater.
FIG. 4F is a front cross-sectional view showing the part of the mold clamping device, the mold according to the first illustrative embodiment, and the pair of half molded articles.
FIG. 4G is a front cross-sectional view showing the part of the mold clamping device, the mold according to the first illustrative embodiment, and a molded article.
FIG. 4H is a front cross-sectional view showing the part of the mold clamping device, the mold according to the first illustrative embodiment, and the molded article.
FIG. 5 is a front cross-sectional view showing the part of the mold clamping device and a mold according to a modification of the first illustrative embodiment.
FIG. 6A is a front cross-sectional view showing a part of an injection molding machine and a mold according to a second illustrative embodiment.
FIG. 6B is a front cross-sectional view showing the part of the injection molding machine, the mold according to the second illustrative embodiment, and a pair of half molded articles.
FIG. 6C is a front cross-sectional view showing the part of the injection molding machine, the mold according to the second illustrative embodiment, and the pair of half molded articles.
FIG. 6D is a front cross-sectional view showing the part of the injection molding machine, the mold according to the second illustrative embodiment, the pair of half molded articles, and a heater.
FIG. 6E is a front cross-sectional view showing the part of the injection molding machine, the mold according to the second illustrative embodiment, a molded article, and the pair of half molded articles.
FIG. 6F is a front cross-sectional view showing the part of the injection molding machine, the mold according to the second illustrative embodiment, the molded article, and the pair of half molded articles.
FIG. 6G is a front cross-sectional view showing the part of the injection molding machine, the mold according to the second illustrative embodiment, the molded article, and the pair of half molded articles.

### DETAILED DESCRIPTION

Hereinafter, specific illustrative embodiments will be described in detail with reference to the drawings. The present disclosure is not limited to the following illustrative embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

### First Illustrative Embodiment

### {Injection Molding Machine}

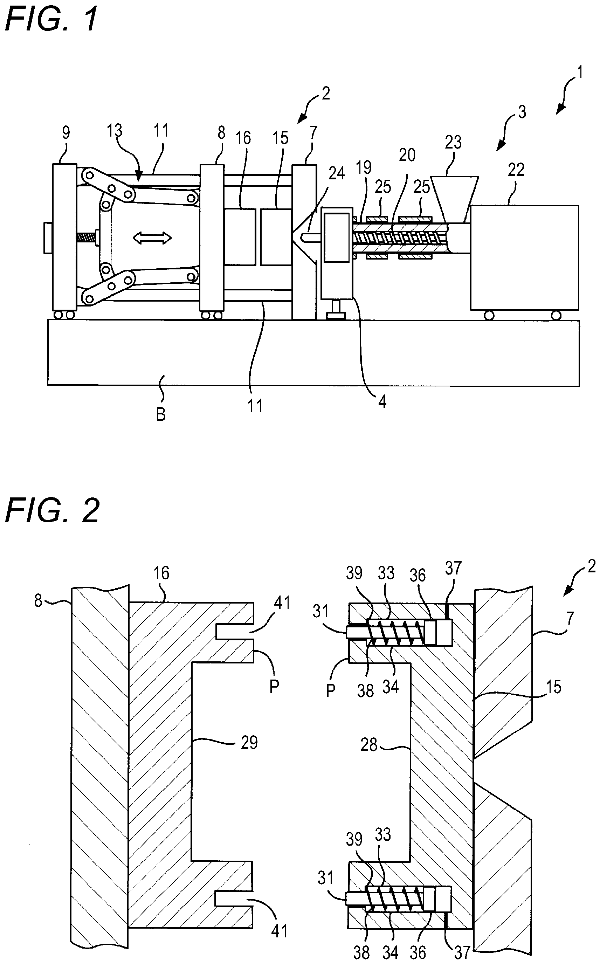

As shown in FIG. 1, an injection molding machine 1 according to a first illustrative embodiment is a so-called horizontal type. That is, an injection molding machine 1 according to a first illustrative embodiment includes a mold clamping device 2 provided on a bed B, an injection device 3 provided on the bed B on a side of the mold clamping device 2, and a control device 4 configured to control the mold clamping device 2 and the injection device 3. Molds 15 and 16 according to the first illustrative embodiment, which will be described in detail later, are provided in the injection molding machine 1 of a horizontal type. However, the injection molding machine 1 is not necessary to limit it to a horizontal type, and the molds can also be provided in a vertical injection molding machine.

### {Mold Clamping Device}

The mold clamping device 2 includes a fixed platen 7 fixed to the bed B, a movable platen 8 provided on the bed B in a slidable manner, and a mold clamping housing 9. The fixed platen 7 and the mold clamping housing 9 are coupled to each other by a plurality of tie bars 11, 11, .... The movable platen 8 is slidable between the fixed platen 7 and the mold clamping housing 9. A mold clamping mechanism, that is, a toggle mechanism 13 is provided between the mold clamping housing 9 and the movable platen 8 in the present illustrative embodiment. The fixed platen 7 and the movable platen 8 are provided with a fixed-side mold 15 and a movable-side mold 16 according to the first illustrative embodiment, respectively. Accordingly, when the toggle mechanism 13 is driven, the molds 15 and 16 are opened and closed.

### {Injection Device}

The injection device 3 includes a heating cylinder 19, a screw 20 provided in the heating cylinder 19, and a screw driving device 22. The heating cylinder 19 is supported by the screw driving device 22. The screw 20 is configured to be driven in a rotation direction and an axial direction by the screw driving device 22. The heating cylinder 19 has a hopper 23 and an injection nozzle 24. Further, the heating cylinder 19 is provided with heaters 25, 25, ...

### {Mold}

The fixed-side mold 15 and the movable-side mold 16 according to the first illustrative embodiment will be described with reference to FIG. 2. In the following description, for convenience, the fixed-side mold 15 is referred to as a first mold 15, and the movable-side mold 16 is referred to as a second mold 16. The first mold 15 has a first concave portion 28 formed in a parting line P, into which a half molded article is inserted as described later. Similarly, the second mold 16 has a second concave portion 29 formed in the parting line P, into which a half molded article is inserted as described later.

The first mold 15 has guide pins 31, 31 configured to guide the mold during the mold clamping, and these guide pins 31, 31 are characterized by structures and a way of being provided. First, guide pin housing holes 33, 33 are formed in the parting line P of the first mold 15, and inner portions of the guide pin housing holes 33, 33 are formed as cylinder portions 34, 34 having an increased diameter. The guide pins 31, 31 are inserted into the guide pin housing holes 33, 33. The rear end portions of the guide pins 31, 31 are formed into piston portions 36, 36 having an increased diameter, and move in a liquid-tight manner on inner peripheral surfaces of the cylinder portions 34, 34. Supply and discharge portions 37, 37 are connected to bottom portions of the guide pin housing holes 33, 33, and pressurized oil is supplied to and discharged from the cylinder portions 34, 34 from and to the outside. That is, the cylinder portions 34, 34 and the piston portions 36, 36 configure a hydraulic cylinder, and the guide pins 31, 31 are driven.

The guide pins 31, 31 are provided with springs 38, 38. One end portion of the springs 38, 38 is in contact with the piston portions 36, 36, and the other end portion is in contact with step portions 39, 39 near the outlets of the guide pin housing holes 33, 33. Accordingly, the springs 38, 38 apply forces to the guide pins 31, 31 in a rearward direction, that is, in a direction in which the guide pins 31, 31 are retracted into the guide pin housing holes 33, 33. When the pressurized oil is supplied from the supply and discharge portions 37, 37, the piston portions 36, 36 are pushed against the forces of the springs 38, 38, causing the guide pins 31, 31 to move forward and tip ends thereof to protrude from the parting line P. On the other hand, when the hydraulic pressure of the pressurized oil is set to zero or reduced, the guide pins 31, 31 are moved rearward by the forces of the springs 38, 38. That is, the guide pins 31, 31 are retracted into the guide pin housing holes 33, 33 and hidden from the parting line P. The hydraulic cylinder, which is made up of the cylinder portions 34, 34 and the piston portions 36, 36, and the springs 38, 38 may serve as an example of a drive mechanism for the guide pins. The first mold 15 may be provided with a guide pin assembly, which includes the guide pins 31, 31 and the drive mechanism for the guide pins.

Guide holes 41, 41 are formed in the second mold 16. As described below, when the first and second molds 15 and 16 are clamped, the guide pins 31, 31 are inserted into the guide holes 41, 41. That is, the mold is guided. As a result, misalignment of the molds 15 and 16 is prevented, and the mold clamping is performed with high accuracy, and the mold is clamped. In the description of the first illustrative embodiment, the first mold 15 is provided as the fixed-side mold 15, that is, provided on the fixed platen 7, and the second mold 16 is provided as the movable-side mold 16, that is, provided on the movable platen 8. Alternatively, the first mold 15 may be provided on the movable platen 8, and the second mold 16 may be provided on the fixed platen 7. That is, the guide pins 31, 31 may be provided not in the mold on the side of the fixed platen 7, but in the mold on the side of the movable platen 8.

### {Molding Method}

The molds 15 and 16 according to the first illustrative embodiment can be brought into a state in which the guide pins 31, 31 are completely retracted, that is, a state in which the guide pins 31, 31 are housed in the guide pin housing holes 33, 33, and therefore, the degree of freedom of work in the vicinity of the molds 15 and 16 is high. In order to understand the degree of freedom of work, a molding method for a molded article according to the first illustrative embodiment, which is performed using the molds 15 and 16, will be described.

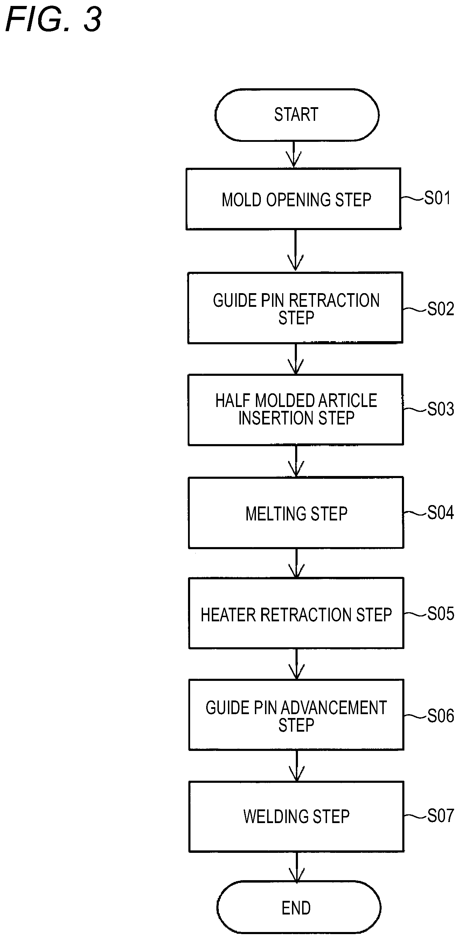

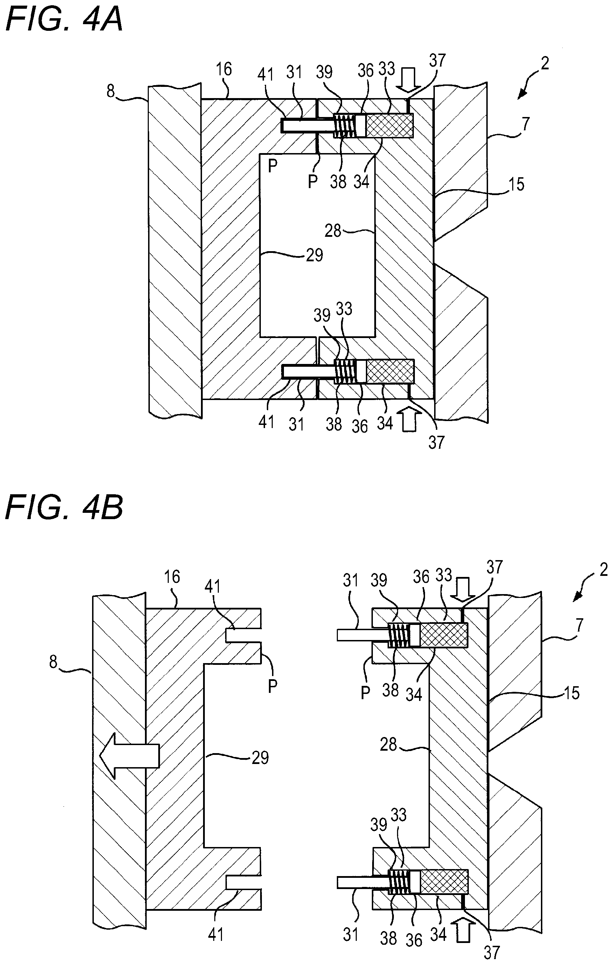

First, as shown in FIG. 3, a mold opening step S01 is performed. The description will start from a state in which the mold clamping device 2 is clamped as shown in FIG. 4A. When the molds are clamped, the pressurized oil is supplied from the supply and discharge portions 37, 37, so that the guide pins 31, 31 are moved forward. That is, the guide pins 31, 31 protruding from the parting line P are inserted into the guide holes 41, 41. From this state, the mold clamping device 2 is driven to open the mold. FIG. 4B shows a state in which the mold is opened.

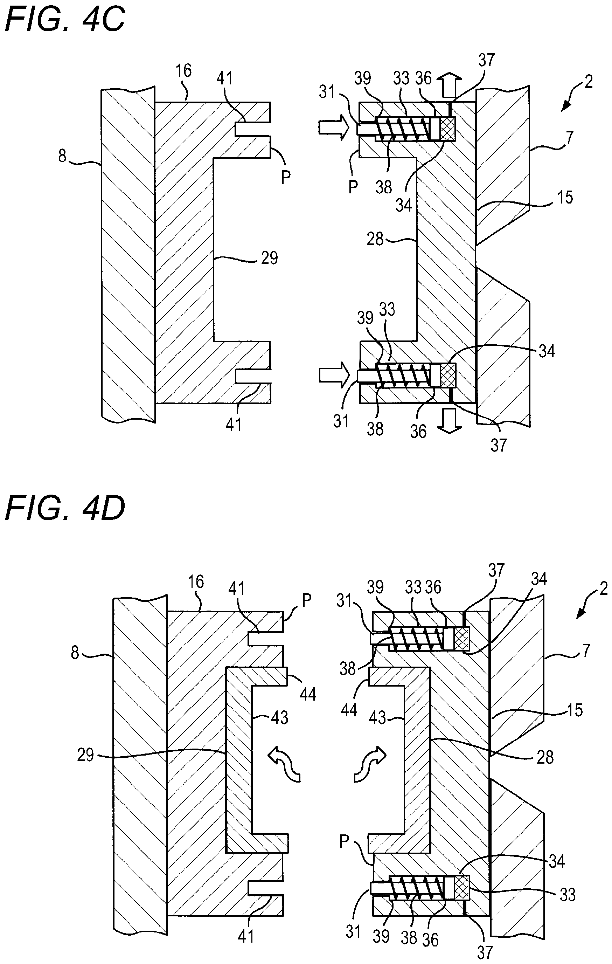

Next, as shown in FIG. 3, a guide pin retraction step S02 is performed. That is, the hydraulic pressure of the pressurized oil applied from the supply and discharge portions 37, 37 is set to zero. Alternatively, the pressure is reduced. Then, as shown in FIG. 4C, the guide pins 31, 31 are moved rearward by the spring forces of the springs 38, 38. The pressurized oil is pushed out from the cylinder portions 34, 34 and discharged from the supply and discharge portions 37, 37. The tip ends of the guide pins 31, 31 are substantially retracted from the parting line P.

As shown in FIG. 3, a half molded article insertion step S03 is performed. That is, as shown in FIG. 4D, half molded articles 43, 43 are inserted into the first and second concave portions 28 and 29, respectively, by a robot hand or the like. Since the guide pins 31, 31 are retracted from the parting lines P, P, the half molded articles 43, 43 can be easily inserted. That is, the degree of freedom in the work of inserting the half molded articles 43, 43 is high. When inserted, end surfaces 44, 44 of the half molded articles 43, 43 face each other.

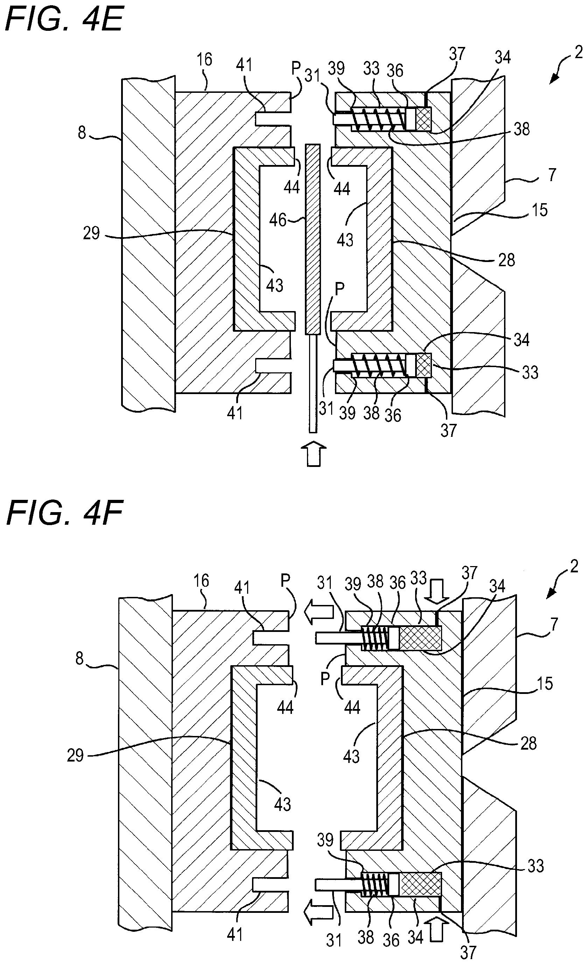

Next, as shown in FIG. 3, a melting step S04 is performed. That is, as shown in FIG. 4E, a heater 46 such as an infrared heater or a carbon heater is inserted between the pair of half molded articles 43, 43 in a non-contact manner. Since the guide pins 31, 31 are retracted from the parting lines P, P, the heater 46 can be easily inserted. That is, the degree of freedom in the work of inserting the heater 46 is high. At this time, the mold clamping device 2 may be driven to adjust a mold opening amount, so that a gap between the end surfaces 44, 44 and the heater 46 becomes smaller. When the heater 46 is energized, the end surfaces 44, 44 are melted in a short time. Once the end surfaces are melted, a heater retraction step S05 is performed as shown in FIG. 3. That is, the heater 46 is retracted.

Next, as shown in FIG. 3, a guide pin advancement step S06 is performed. That is, as shown in FIG. 4F, the pressurized oil is supplied from the supply and discharge portions 37, 37. Then, the pressurized oil is supplied to the cylinder portions 34, 34, the piston portions 36, 36 are pushed out, and the guide pins 31, 31 are moved forward. That is, the guide pins 31, 31 protrude from the parting line P.

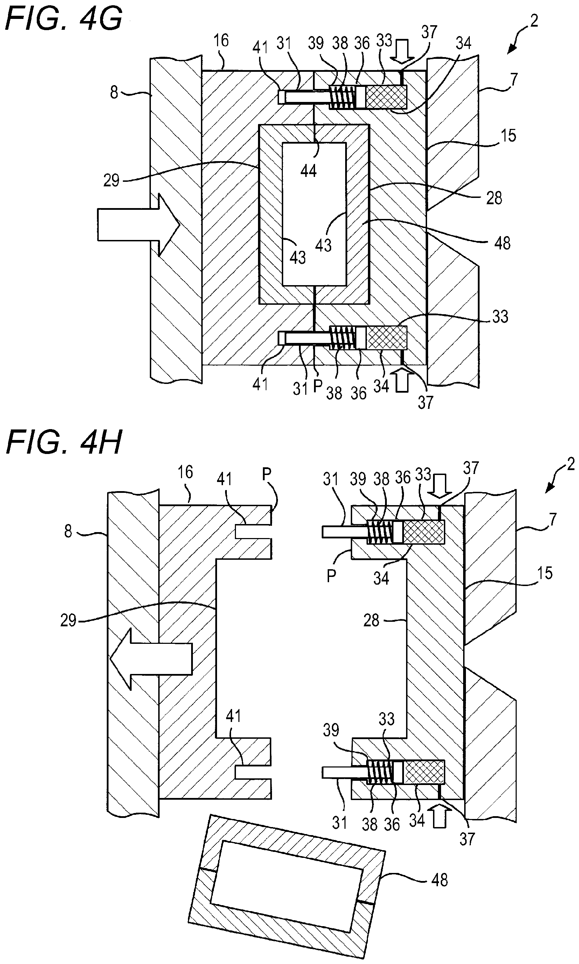

Finally, as shown in FIG. 3, a welding step S07 is performed. That is, as shown in FIG. 4G, the mold clamping is performed in the mold clamping device 2. The guide pins 31, 31 are guided by the guide holes 41, 41, and the first and second molds 15 and 16 are clamped with high accuracy. The end surfaces 44, 44 of the pair of half molded articles 43, 43 are welded to each other. When the pair of half molded articles are integrated by welding, a molded article 48 is obtained. When the mold is opened, the molded article 48 is obtained as shown in FIG. 4H. The guide pins 31, 31 may be retracted before the molded article 48 is taken out. In this way, the molded article 48 can be easily taken out without being hindered by the guide pins 31, 31.

### Modifications

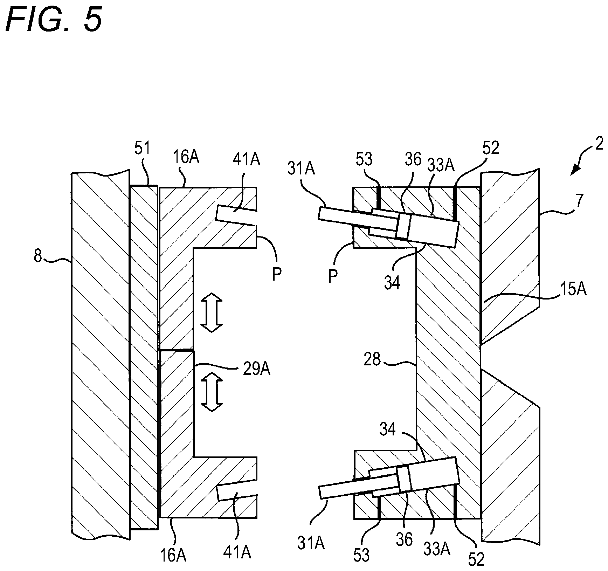

The molds 15 and 16 (see FIG. 2) according to the first illustrative embodiment can be modified. FIG. 5 shows molds 15A, 16A, 16A according to a modification of the first illustrative embodiment. In the molds 15A, 16A, and 16A according to this modification, the same members and structures as those of the first illustrative embodiment are denoted by the same reference numerals, and description thereof will be omitted. The molds 15A, 16A, and 16A according to the modification will be described with respect to differences from the molds 15 and 16 according to the first illustrative embodiment.

First, the second molds 16A and 16A according to the modification are different from that of the first illustrative embodiment in that the second mold includes two separate pieces. The two molds 16A, 16A are provided on a surface of a base plate 51 fixed to the movable platen 8 opposite to the surface which is in contact with the movable platen 8 so as to be slidable in a direction of the arrows in FIG. 5. When the second molds 16A, 16A reach a sliding position where they come into contact with each other, as shown in FIG. 5, one concave portion, that is, a second concave portion 29A is formed.

The second illustrative embodiment is also different from the first illustrative embodiment in that guide holes 41A and 41A formed in the second molds 16A and 16A and guide pins 31A and 31A provided in the first mold 15A are not perpendicular to the parting line but oblique to the parting line. That is, the guide holes 41A, 41A are obliquely formed to diverge (that is, so as to be away from each other) toward the back of the hole. On the other hand, the guide pins 31A, 31A are obliquely formed such that the guide pin housing holes 33A, 33A converge (that is, the guide pin housing holes 33A, 33A approach each other) toward the back of the hole, into which the guide pins 31A, 31A are inserted. The guide pin 31A and the corresponding guide hole 41A on one side, and the guide pin 31A and the corresponding guide hole 41A on the other side are oriented in the same direction.

In the modification, the drive mechanism of the guide pins 31A and 31A is also different from that of the first illustrative embodiment. Specifically, the drive mechanism includes an air cylinder. That is, the air cylinder is formed by a cylinder portion 34 and piston portions 36, 36, and air supply and discharge portions 52 and 53, and the like, are provided. The cylinder portion 34 has an increased diameter at the inner portion of the guide pin housing holes 33A and 33A. The piston portions 36, 36 are disposed at the rear end portions of the guide pins 31A and 31A. Therefore, when air is supplied from the air supply and discharge portions 52, 52, the guide pins 31A, 31A protrude from the parting line P, and when air is supplied from the air supply and discharge portions 53, 53, the guide pins 31A, 31A are retracted from the parting line P.

In the molds 15A, 16A, and 16A according to the modifications, the guide pins 31A and 31A can also be retracted from the parting line P as in the first illustrative embodiment, so that the degree of freedom of work in the vicinity of the molds 15A, 16A, and 16A is high. As described above, since the guide pins 31A and 31A protrude obliquely with respect to the parting line P, when the mold clamping device 2 is driven to close the molds, the two molds 16A and 16A slide toward each other as the guide pins 31A and 31A are inserted into the guide holes 41A and 41A. On the other hand, when the mold clamping device 2 is driven to open the molds, the two molds 16A, 16A slide in directions away from each other as the guide pins 31A, 31A are pulled out from the guide holes 41A, 41A.

### Second Illustrative Embodiment

### {Injection Molding Machine}

A second illustrative embodiment will be described. The second illustrative embodiment differs from the first illustrative embodiment only in the mold, and is otherwise configured in the same manner as the first illustrative embodiment. Therefore, the same members such as the injection molding machine 1, the mold clamping device 2, and the injection device 3 are denoted by the same reference numerals, and description thereof will be omitted.

### {Mold}

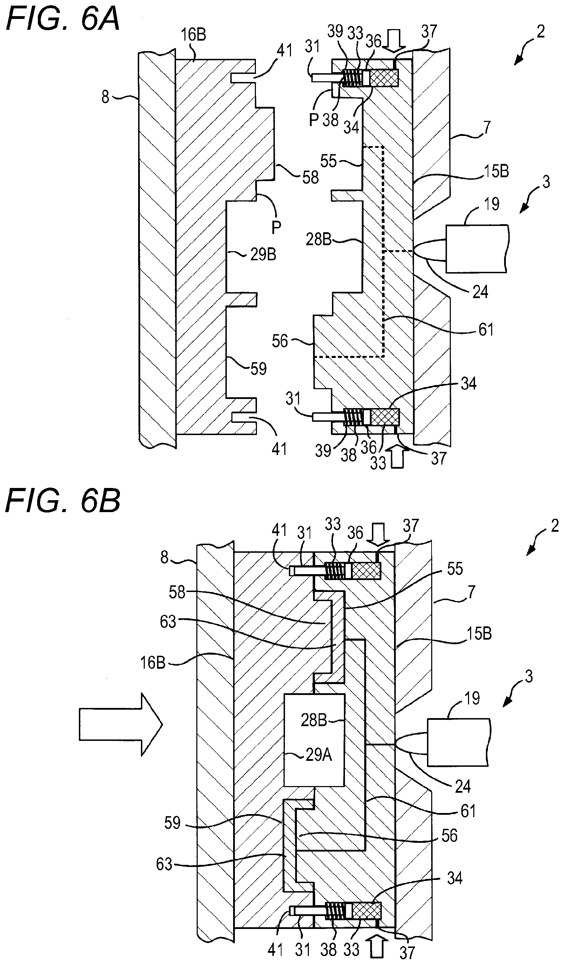

Molds 15B and 16B according to a second illustrative embodiment will be described with reference to FIG. 6A. A first mold 15B according to the second illustrative embodiment also has a plurality of guide pins 31, 31, similarly to the first illustrative embodiment (see FIG. 2). The guide pins 31, 31 have the same configuration as in the first illustrative embodiment. That is, the guide pins 31, 31 are inserted into the guide pin housing holes 33, 33 formed in the first mold 15B, the inner portions of the guide pin housing holes 33, 33 are cylinder portions 34, 34 having an increased diameter, and the rear ends of the guide pins 31, 31 are piston portions 36, 36 having an increased diameter. The guide pins 31, 31 are protruded forward by the pressurized oil supplied from the supply and discharge portions 37, 37, and are retreated from the parting line P by the springs 38, 38 when the applied hydraulic pressure becomes zero. Similarly, in the second illustrative embodiment, the guide holes 41, 41 are formed at the parting line P in the second mold 16B.

Similarly to the first illustrative embodiment, the molds 15B and 16B according to the second illustrative embodiment also have a first concave portion 28B and a second concave portion 29B formed in the center. Half molded articles are insertable into the concave portions.

The molds 15B and 16B according to the second illustrative embodiment have structures different from those of the first illustrative embodiment. That is, in the first mold 15B, along the parting line P, a first molding concave portion 55 is formed above the first concave portion 28B, and a first molding convex portion 56 is formed below the first concave portion 28B. In the second mold 16B, along the parting line P, a second molding convex portion 58 is formed above the second concave portion 29B, and a second molding concave portion 59 is formed below the second concave portion 29B. In the first mold 15B, a runner 61 through which resin from the injection nozzle 24 flows is connected to the first molding concave portion 55 and the first molding convex portion 56.

### {Molding Method}

A molding method for a molded article according to the second illustrative embodiment performed by using the molds 15B and 16B according to the second illustrative embodiment will be described. As shown in FIG. 6A, the first and second molds 15B and 16B are clamped in a state where the guide pins 31, 31 protrude from the parting line P. Then, as shown in FIG. 6B, the first molding concave portion 55 and the second molding convex portion 58 form one cavity, and the second molding concave portion 59 and the first molding convex portion 56 form one cavity. Resin is injected from the injection device 3. Then, the cavities are filled with the resin, and half molded articles 63, 63 are molded.

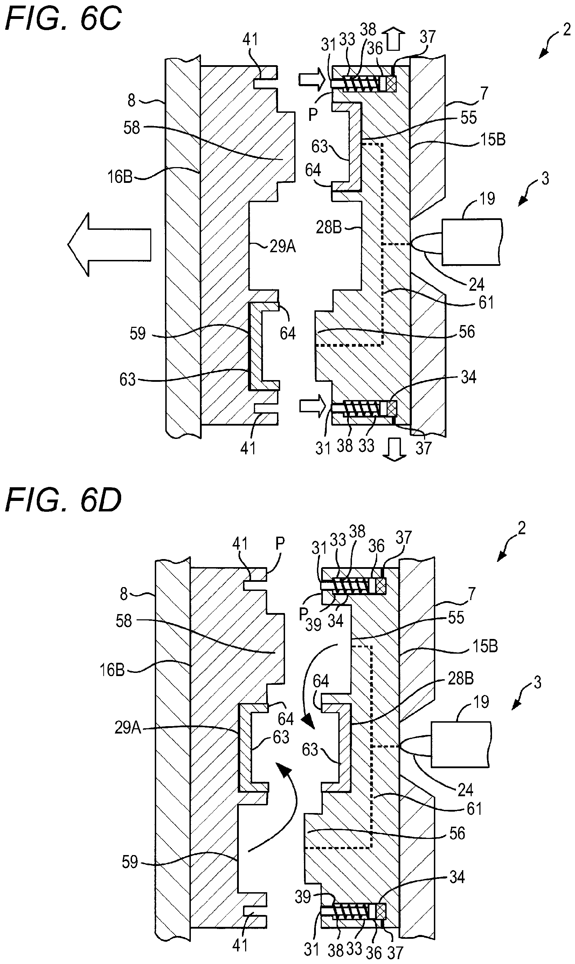

After the half molded articles 63, 63 are cooled and solidified, the first and second molds 15B and 16B are opened. As shown in FIG. 6C, the guide pins 31, 31 are retracted from the parting line P. That is, the hydraulic pressure of the pressurized oil applied from the supply and discharge portions 37, 37 is reduced to zero, and the guide pins 31, 31 are moved back by the springs 38, 38. As shown in FIG. 6D, the half molded articles 63, 63 are taken out from the first molding concave portion 55 and the second molding concave portion 59 by a robot hand or the like and inserted into the first concave portion 28B and the second concave portion 29B. Since the guide pins 31, 31 are retracted, the half molded articles 63, 63 can be easily moved. When the half molded articles 63, 63 are inserted into the first and second concave portions 28B and 29B, end surfaces 64, 64 face each other.

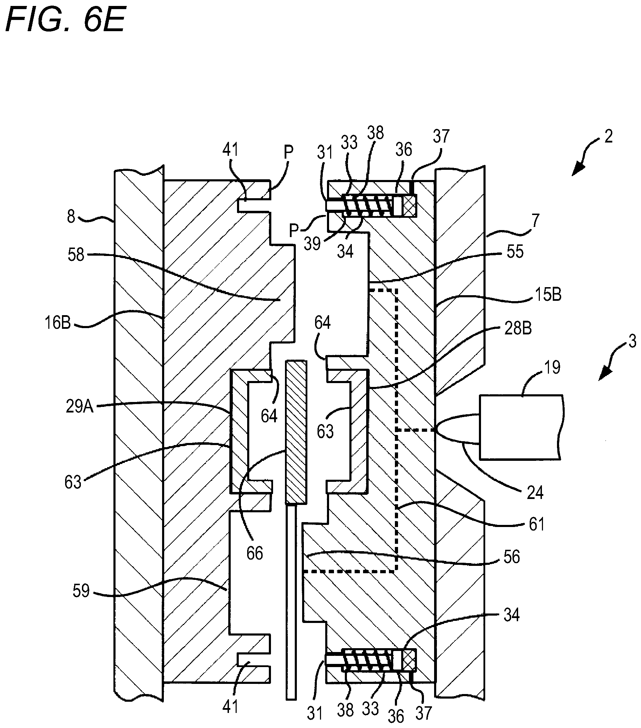

As shown in FIG. 6E, a heater 66 is inserted between the first and second molds 15B and 16B to melt the end surfaces 64, 64 of the pair of half molded articles 63, 63. Since the guide pins 31, 31 are retracted, the heater 66 can be easily inserted.

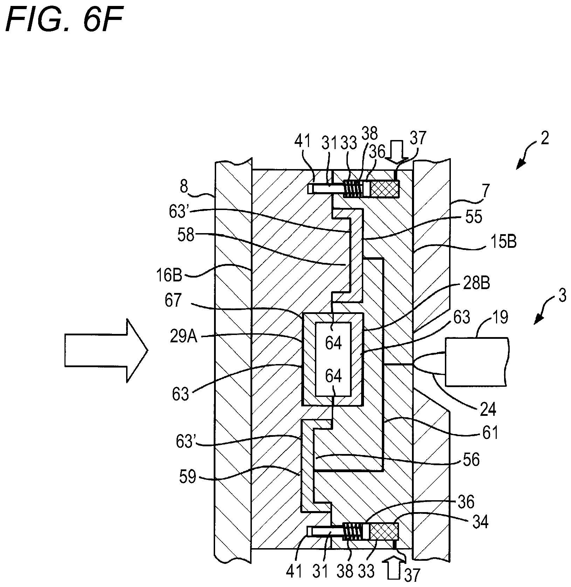

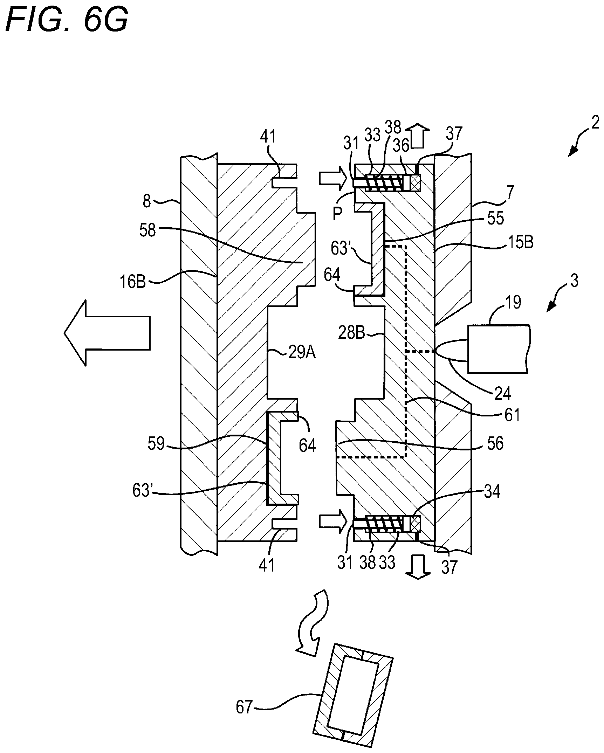

The heater 66 is retracted, and the pressurized oil is supplied from the supply and discharge portions 37, 37 to move the guide pins 31, 31 forward. Next, the molds are clamped by the mold clamping device 2. Then, as shown in FIG. 6F, the end surfaces 64, 64 of the pair of half molded articles 63, 63 are welded to each other to obtain a molded article 67. At this time, the resin is simultaneously injected from the injection device 3 to newly mold a pair of half molded articles 63', 63'. The mold clamping device 2 is driven to open the first and second molds 15B and 16B. As shown in FIG. 6G, the guide pins 31, 31 are retracted from the parting line P, and the molded article 67 is taken out. Thereafter, the newly molded pair of half molded articles 63' and 63' are moved to the first and second concave portions 28B and 29B, the heater 66 (see FIG. 6E) is inserted, and the same process is performed, so that the molded article 67 can be continuously molded.

Although the invention made by the present inventor has been specifically described above based on the illustrative embodiments, it is needless to say that the present invention is not limited to the illustrative embodiments described above, and various modifications can be made without departing from the scope of the invention. The plurality of examples described above may be appropriately combined.

## Claims

1. A mold comprising:
a guide pin configured to guide mold closing,
wherein the guide pin is housed in a guide pin housing hole formed in a parting line and is configured to be driven by a predetermined drive mechanism, and
wherein the guide pin is configured to protrude its tip end from the parting line and to retract into the guide pin housing hole by the drive mechanism.

2. The mold according to claim 1,
wherein the drive mechanism comprises a hydraulic cylinder and a spring,
wherein the hydraulic cylinder includes:
a cylinder portion having an increased diameter at an inner portion of the guide pin housing hole; and
a piston portion having an increased diameter at a rear end portion of the guide pin,
the hydraulic cylinder being configured to move the guide pin forward with a supply of pressurized oil, and
wherein the spring is provided to apply a force to the guide pin in a rearward direction, the spring being configured to retract the guide pin into the guide pin housing hole upon stopping the supply of the pressurized oil.

3. The mold according to claim 1,
wherein the drive mechanism comprises a fluid cylinder,
wherein the fluid cylinder includes:
a cylinder portion having an increased diameter at an inner portion of the guide pin housing hole; and
a piston portion having an increased diameter at a rear end portion of the guide pin,
wherein the fluid cylinder has two fluid supply ports, a supply of a fluid from one of the fluid supply ports causing the guide pin to move forward, and a supply of a fluid from the other of the fluid supply ports causing the guide pin to retreat into the guide pin housing hole.

4. The mold according to claim 3, wherein the fluid cylinder is a hydraulic cylinder, and the fluid is pressurized oil.

5. A mold clamping device comprising:
a fixed platen; and
a movable platen configured to move forward and rearward with respect to the fixed platen,
wherein the fixed platen and the movable platen are provided with a pair of molds,
wherein the mold has a guide pin configured to guide mold closing,
wherein the guide pin is housed in a guide pin housing hole formed in a parting line and is configured to be driven by a predetermined drive mechanism, and
wherein the guide pin is configured to protrude its tip end from the parting line and to retract into the guide pin housing hole by the drive mechanism.

6. The mold clamping device according to claim 5,
wherein the drive mechanism comprises a hydraulic cylinder and a spring,
wherein the hydraulic cylinder includes:
a cylinder portion having an increased diameter at an inner portion of the guide pin housing hole; and
a piston portion having an increased diameter at a rear end portion of the guide pin,
the hydric cylinder being configured to move the guide pin forward with a supply of pressurized oil, and
wherein the spring is provided to apply a force to the guide pin in a rearward direction, the spring being configured to retract the guide pin into the guide pin housing hole upon stopping the supply of the pressurized oil.

7. The mold clamping device according to claim 5,
wherein the drive mechanism comprises a fluid cylinder,
wherein the fluid cylinder includes:
a cylinder portion having an increased diameter at an inner portion of the guide pin housing hole; and
a piston portion having an increased diameter at a rear end portion of the guide pin,
wherein the fluid cylinder has two fluid supply ports, a supply of a fluid from one of the fluid supply ports causing the guide pin to move forward, and a supply of a fluid from the other of the fluid supply ports causing the guide pin to retreat into the guide pin housing hole.

8. The mold clamping device according to claim 7, wherein the fluid cylinder is a hydraulic cylinder, and the fluid is pressurized oil.

9. An injection molding machine comprising:
an injection device; and
a mold clamping device,
wherein the mold clamping device comprises:
a fixed platen, and
a movable platen configured to move forward and rearward with respect to the fixed platen,
wherein the fixed platen and the movable platen are provided with a pair of molds,
wherein the mold has a guide pin configured to guide mold closing,
wherein the guide pin is housed in a guide pin housing hole formed in a parting line and is configured to be driven by a predetermined drive mechanism, and
wherein the guide pin is configured to protrude its tip end from the parting line and to retract into the guide pin housing hole by the drive mechanism.

10. The injection molding machine according to claim 9,
wherein the drive mechanism comprises a hydraulic cylinder and a spring,
wherein the hydraulic cylinder includes:
a cylinder portion having an increased diameter at an inner portion of the guide pin housing hole; and
a piston portion having an increased diameter at a rear end portion of the guide pin,
the hydraulic cylinder being configured to move the guide pin forward with a supply of pressurized oil, and
wherein the spring is configured to apply a force to the guide pin in a rearward direction, the spring being configured to retract the guide pin into the guide pin housing hole upon stopping the supply of the pressurized oil.

11. A molding method for a molded article that molds a molded article by using a first mold having a first concave portion for housing a first half molded article, a second mold having a second concave portion for housing a second half molded article, and a heater,
the first mold having a guide pin housing hole in a parting line, the guide pin housing hole being provided with a guide pin configured to be driven by a predetermined drive mechanism,
the molding method comprising:
a mold opening step of opening the first mold and the second mold;
a guide pin retraction step of retracting the guide pin to the guide pin housing hole by the drive mechanism;
a half molded article insertion step of inserting a first half molded article and a second half molded article into the first concave portion and the second concave portion, respectively;
a melting step of inserting the heater between the first half molded article and the second half molded article to heat and melt end surfaces of the first half molded article and the second half molded article in a non-contact manner;
a heater retraction step of retracting the heater;
a guide pin advancement step of advancing the guide pin by the drive mechanism to protrude a tip end of the guide pin from the parting line; and
a welding step of clamping the first mold and the second mold to pressure-weld the end surfaces of the first and second half molded articles to each other to obtain a molded article.
